# EUROPÄISCHE PATENTSCHRIFT

(11) **EP 2 181 585 B1**
(45) Veröffentlichungstag und Bekanntmachung des Hinweises auf die Patenterteilung: **02.01.2013**
(21) Anmeldenummer: 08019003.6
(22) Anmeldetag: 30.10.2008
(51) Int. Cl.: A01K 1/015

(54) **Gummibelag für ein Spaltenrostelement**
Rubber lining for a slatted floor element
Revêtement en caoutchouc pour un élément de sol de caillebotis

(43) Veröffentlichungstag der Anmeldung: 05.05.2010
(73) Patentinhaber: Betonwerk Schwarz GmbH, 84513 Töging am Inn (DE)
(72) Erfinder: Schwarz, Rudolf, 84543 Winhöring (DE)
(74) Vertreter: Hano, Christian

(56) Entgegenhaltungen:
- EP-A- 1 232 687
- EP-A- 1 656 828
- US-A- 1 874 644
- US-A- 3 591 446
- US-A- 3 824 960
- US-A- 4 768 465

## Beschreibung

Die Erfindung betrifft einen Gummibelag für ein Spaltenrostelement mit einem länglichen, im Wesentlichen plattenförmigen Profilkörper, in dessen mittlerem Querschnittsbereich mehrere, in Längsrichtung des Profilkörpers parallel zueinander in einer horizontalen Ebene verlaufende Durchgangsöffnungen vorgesehen sind.

Aus der DE 60 2004 001 123 T2 ist ein Spaltenrostelement bekannt, das mehrere im Abstand zueinander in einer Ebene angeordnete Längsbalken und mehrere im Abstand zueinander in der Ebene der Längsbalken angeordnete Querbalken aufweist, die die Längsbalken kreuzen und mit diesen ein Teil aus Beton bilden. Die Oberseite der Längsbalken ist mit Rillen versehen, um das Risiko zu vermindern, dass Vieh auf dem Spaltenrostelement ausrutscht. Um ein Anhaften von Schmutz auf den Rillen zu verhindern, können die Rillen mit einer Schutzschicht aus Epoxy und Silikonen versehen werden. Die Rutschgefahr wird jedoch durch die Ausbildung von Rillen nicht komplett beseitigt, da das Profil aus Beton nicht nachgibt, weshalb die Klauen der Kühe keinen sicheren Halt finden. Insbesondere nach längerem Einsatz können Spaltenrostelemente aus Beton glatt werden, so dass die Gefahr besteht, dass Tiere ausrutschen und sich verletzen.

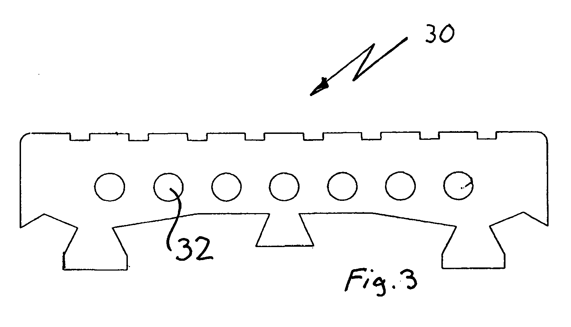

Um diese Rutsch- und Verletzungsgefahr zu vermeiden, ist es beispielsweise aus der noch nicht veröffentlichten europäischen Patentanmeldung 08 011 351.7 bekannt, auf den Längs- und/oder Querbalken Gummibeläge aufzubringen, die jeweils von länglichen, plattenförmigen Gummiprofilen gebildet werden. Ein solches Gummiprofil 30 ist in Fig. 3 gezeigt. Im mittleren Querschnittsbereich des Gummiprofils 30 sind mehrere in einer horizontalen Ebene parallel zueinander in Längsrichtung des Gummiprofils verlaufende Durchgangsbohrungen 32 mit kreisförmigem Querschnitt ausgebildet, um dem Gummiprofil 30 eine höhere Elastizität zu verschaffen, damit sich der Huf eines Rindes beim Auftritt in das Gummiprofil 30 eindrücken kann. Die Durchgangsöffnungen 32 haben in der Regel einen Durchmesser von ca. 7 mm. Nach häufiger Belastung besteht bei diesen Durchgangsöffnungen 32 jedoch die Gefahr, dass es zu Überdehnungen des Gummis an den Durchgangsöffnungen 32 kommen kann. Bei einer zu großen Belastung, die nie ausgeschlossen werden kann, wird dann der Rand der Durchgangsöffnungen 32 überdehnt und verliert seine Haltbarkeit.

Aus der DE-A-1 759 787 A ist ein Belag für Sportanlagen bekannt, der aus zwei Schichten besteht, in denen jeweils parallel verlaufende Aussparungen mit rechteckigem Querschnitt ausgebildet sind, die in die Unterseite bzw. Oberseite der Schichten münden. Die beiden Schichten sind so zusammengesetzt, dass sich die Aussparungen der beiden Schichten in einem Winkel von 45° bis 90° kreuzen. Als Material ist eine thermoplastische Formmasse angegeben. Ein Beispiel besteht aus 100 Gewichtsteilen Bitumen, 80 bis 100 Gewichtsteilen Äthylenpolymerisat, das auf 100 Gewichtsteile Äthylen 3 bis 70 Gewichtsteile eines n-Butylesters der Acrylsäure einpolymerisiert enthält. Die leistenförmigen Aussparungen haben eine Höhe von 1 bis 5 mm und eine Querschnittsfläche von 2 bis 25 mm².

In der EP-A-1656 828 ist ein Bodenbelag für einen Stall offenbart der eine Matte aus Elastomer umfasst, in der eine Vielzahl von Hohlräumen vorgesehen sind, die sich parallel zueinander in Längsrichtung der Matte erstrecken.

Die US-A-3 824 960 beschreibt einen Bodenbelag für einen Stall, der eine Vielzahl von nebeneinander angeordneten Gummistreifen umfasst, die in einem Zementboden verankert sind. in den Streifen sind mehrere Hohlräume ausgebildet, die sich parallel zueinander in Längsrichtung der Streifen erstrecken

Der Erfindung liegt die Aufgabe zugrunde, mit konstruktiv einfachen Mitteln einen Gummibelag für ein Spaltenrostelement zu schaffen, der Tieren einen sicheren Halt verleiht und eine hohe Lebensdauer aufweist.

Diese Aufgabe wird durch einen Gummibelag mit den Merkmalen des Patentanspruchs 1 gelöst.

Bei dem erfindungsgemäßen Gummibelag wird durch die Shorehärte von 60 bis 80 Shore, die Höhe der Durchgangsöffnungen mit rechteckigem Querschnitt von 1 bis 5 mm und deren Breite von 1 bis 6 cm gewährleistet, dass die obere Wand der Durchgangsöffnungen bei einer Belastung auf die untere Wand auftrifft, wodurch die Verformung der Durchgangsöffnungen begrenzt wird. Hierdurch wird die Materialermüdung minimiert und auch bei langen und großen Belastungen eine ausgezeichnete Lebensdauer garantiert. Außerdem wird die Eindringtiefe der Klauen durch die Höhe der Durchgangsöffnungen exakt definiert.

Die Höhe der Durchgangsöffnungen beträgt zweckmäßigerweise 1 bis 3 mm, vorzugsweise 2 mm.

Die Breite der Durchgangsöffnungen beträgt zweckmäßigerweise 3 bis 5 cm, vorzugsweise 4 cm.

Der Profilkörper des Gummibelags besteht vorzugsweise aus Naturkautschuk oder Styrol-Butadien-Kautschuk.

Um den Gummibelag fest in einem Längs- bzw. Querbalken aus Beton verankern zu können, werden an der Unterseite des Profilkörpers vorzugsweise hinterschnittene Verankerungselemente vorgesehen.

Der erfindungsgemäße Gummibelag findet vorzugsweise in einem Spaltenrostelement mit mehreren in einer Ebene angeordneten Längs- und Querbalken Anwendung.

Ein Ausführungsbeispiel der Erfindung wird nachstehend anhand von Zeichnungen näher beschrieben.

Es zeigen:
- Fig. 1: eine Draufsicht auf ein mit Gummibelägen versehenes Längsspaltenrostelement,
- Fig. 2: den Schnitt III-III des Längsspaltenrostelements von Fig. 1,
- Fig. 3: einen bekannten Gummibelag,
- Fig. 4: einen erfindungsgemäßen Gummibelag.

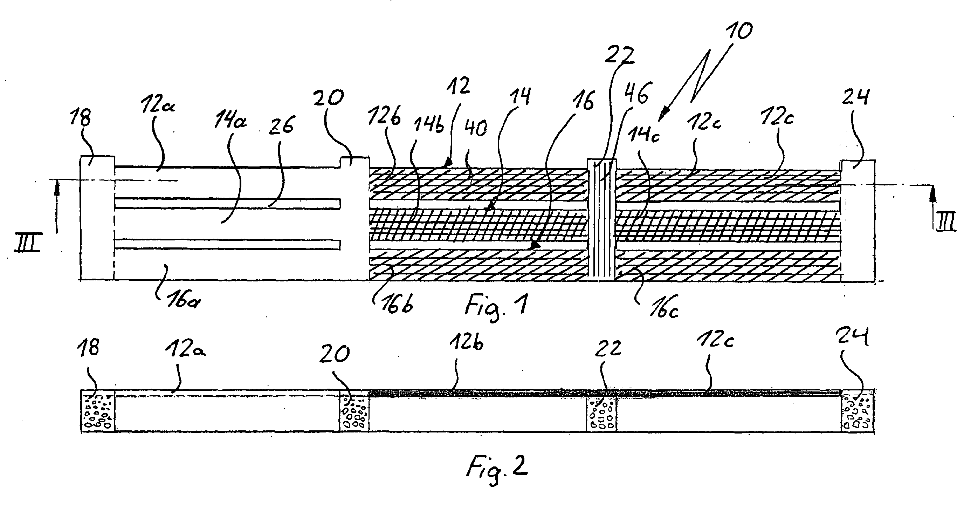

Wie es in den Figuren 1 und 2 gezeigt ist, weist ein Längsspaltenrostelement 10 z. B. drei parallele im Abstand zueinander angeordnete Längsbalken 12, 14, 16 auf. Die Längsbalken 12, 14, 16 werden von vier in gleichmäßigem Abstand zueinander angeordneten Querbalken 18, 20, 22, 24 gekreuzt, wobei die Längsbalken 12, 14, 16 und die Querbalken 18, 20, 22, 24 zusammen ein Gußteil aus Beton bilden, dessen Oberfläche in einer Ebene verläuft. Die äußeren Querbalken 18, 24 sind an den entgegen gesetzten Enden der Längsbalken 12, 14, 16 vorgesehen. Durch die Querbalken 18, 20, 22, 24 werden die Längsbalken 12, 14, 16 jeweils in drei gleich lange Abschnitte 12a, 12b, 12c und 14a, 14b, 14c sowie 16a, 16b, 16c unterteilt. Die Oberseite der beiden in Fig. 1 rechten Abschnitte 12b, 12c und 14b, 14c sowie 16b, 16c der Längsbalken 12, 14, 16 ist jeweils durch einen Gummibelag 40 abgedeckt. Ein entsprechender Gummibelag 40 befindet sich auch auf der Oberseite des zwischen diesen Abschnitten angeordneten Querbalkens 22. Die restlichen Querbalken 18, 20, 24 sowie die Abschnitte 12a, 14a, 16a sind nicht mit einem Gummibelag 40 versehen, so dass ihre Oberfläche aus Beton gebildet ist, wobei die Oberfläche bündig zur Oberseite der Gummibeläge 40 verläuft.

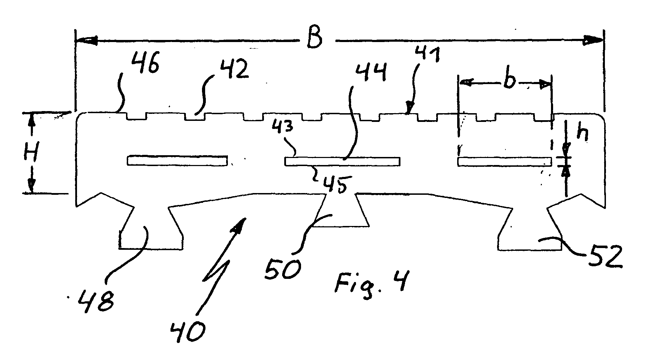

Wie es in Fig. 4 gezeigt ist, wird der Gummibelag 40 von einem länglichen, im Wesentlichen plattenförmigen Gummiprofil 41 gebildet, dessen Breite B im Wesentlichen der Breite des entsprechenden Längs- bzw. Querbalkens entspricht, auf dem der Gummibelag 40 angebracht ist. Diese Breite beträgt normalerweise zwischen 8 und 16 cm. Die Höhe H des Gummiprofils 41 beträgt 1 bis 3 cm, bevorzugt ca. 2 cm.

In der in einer horizontalen Ebene liegenden Oberseite 46 des Gummiprofils 41 sind in Längsrichtung des Gummiprofils 42 verlaufende Längsrillen 42 parallel im Abstand zueinander ausgebildet. An seiner Unterseite ist das Gummiprofil 41 mit drei hinterschnittenen, im Querschnitt schwalbenschwanzförmigen Verankerungselementen 48, 50, 52 versehen, die in Längsrichtung des Gummiprofils 41 verlaufen.

Das Gummiprofil 41 besteht bevorzugt aus Styrol-Butadien-Kautschuk mit einer Härte von bevorzugt 70 Shore.

Im mittleren Querschnittsbereich des Gummiprofils 41 sind drei, in einer horizontalen Ebene parallel zueinander in Längsrichtung des Gummiprofils verlaufende Durchgangsöffnungen 44 mit rechteckigem Querschnitt ausgebildet, um dem Gummibelag 40 eine höhere Elastizität zu verleihen, damit sich der Huf eines Rindes beim Auftritt in das Gummiprofil 41 eindrücken kann.

Die obere Wand 43 sowie die untere Wand 45 der Durchgangsöffnungen 44 verlaufen parallel zueinander in einer horizontalen Ebene. Bei einer bevorzugten Ausführungsform beträgt der Abstand h zwischen den Wänden 43, 45, d. h. die Höhe h der Durchgangsöffnungen 44, 2 mm. Die Breite b der Durchgangsöffnungen beträgt bei dieser Ausführungsform 4 cm. Die Wand 43 der Durchgangsöffnungen 44 liegt bevorzugt ungefähr 1 cm unterhalb der Oberseite 46 des Profilkörpers 41.

Durch diese Ausbildung der Durchgangsöffnungen wird erreicht, dass bei einer Belastung durch eine Tierklaue die obere Wand 43 auf die untere Wand 45 gedrückt wird, wodurch eine definierte Durchbiegung von der Höhe h erreicht wird. Hierdurch wird eine Überdehnung der Wände 43, 44 verhindert und somit die Lebensdauer erhöht. Die Eindringtiefe der Klauen kann durch die Höhe h ziemlich exakt eingehalten werden.

Die beschriebene Ausführungsform des Gummibelags 40 mit Profilkörper 41 wird als besonders bevorzugt angesehen. Ausreichende Ergebnisse werden jedoch auch mit Profilkörpern mit einer Härte von 60 bis 80 Shore erreicht, deren Durchgangsöffnungen mit rechteckigem Querschnitt eine Höhe zwischen 1 bis 5 mm und eine Breite von 1 bis 6 cm aufweisen. Die Anzahl der Durchgangsöffnungen ist nicht auf drei begrenzt. Abhängig von der Breite der Durchgangsöffnungen können auch mehr oder weniger Durchgangsöffnungen vorgesehen werden. Es muss lediglich gewährleistet werden, dass die Klaue eines Rindes soweit eindringen kann, dass ein sicherer Halt gewährleistet ist.

## Patentansprüche

1. Gummibelag für ein Spaltenrostelement, mit einem länglichen, im Wesentlichen plattenförmigen Profilkörper (41), in dessen mittlerem Querschnittsbereich mehrere in Längsrichtung des Profilkörpers (41) parallel zueinander in einer horizontalen Ebene verlaufende Durchgangsöffnungen (44) vorgesehen sind, **dadurch gekennzeichnet, dass** der Profilkörper (41) eine Härte von 60 bis 80 Shore aufweist und dass die Durchgangsöffnungen (44) einen rechteckigen Querschnitt aufweisen, wobei die Höhe (h) der Durchgangsöffnungen (44) 1 bis 5 mm und die Breite (b) 1 bis 6 cm beträgt.

2. Gummibelag nach Anspruch 1, **dadurch gekennzeichnet, dass** die Höhe (h) der Durchgangsöffnungen (44) 1 bis 3 mm, vorzugsweise 2 mm beträgt.

3. Gummibelag nach Anspruch 1 oder 2, **dadurch gekennzeichnet, dass** die Breite (b) der Durchgangsöffnungen (44) 3 bis 5 cm, vorzugsweise 4 cm beträgt.

4. Gummibelag nach einem der vorhergehenden Ansprüche, **dadurch gekennzeichnet, dass** der Profilkörper (41) aus Naturkautschuk besteht.

5. Gummibelag nach einem der Ansprüche 1 bis 3, **dadurch gekennzeichnet, dass** der Profilkörper (41) aus Styrol-Butadien-Kautschuk besteht.

6. Gummibelag nach einem der vorhergehenden Ansprüche, **dadurch gekennzeichnet, dass** an der Unterseite des Profilkörpers (41) hinterschnittene Verankerungselemente (48, 50, 52) vorgesehen sind.

7. Spaltenrostelement mit mehreren in einer Ebene angeordneten Längs- und Querbalken (12, 14, 16; 18, 20, 22, 24), wobei auf wenigstens einem Teil der Längs- und Querbalken (12, 14, 16; 18, 20, 22, 24) ein Gummibelag (40) nach einem der Ansprüche 1 bis 6 angeordnet ist.

## Claims

1. A rubber lining for a grid floor element, comprising an elongate, substantially plate-shaped profiled body (41) having a plurality of through-holes (44) provided in the middle area of its cross section, which extend in parallel to one another in a horizontal plane in the longitudinal direction of the profiled body (41), **characterized in that** the profiled body (41) has a hardness of 60 to 80 Shore and that the through-holes (44) have a rectangular cross section, wherein the height (h) of the through-holes (44) is 1 to 5 mm and the width (b) is 1 to 6 cm.

2. The rubber lining according to claim 1, **characterized in that** the height (h) of the through-holes (44) is 1 to 3 mm, preferably 2 mm.

3. The rubber lining according to claim 1 or 2, **characterized in that** the width (b) of the through-holes (44) is 3 to 5 cm, preferably 4 cm.

4. The rubber lining according to one of the preceding claims, **characterized in that** the profiled body (41) is made of natural rubber.

5. The rubber lining according to one of claims 1 to 3, **characterized in that** the profiled body (41) is made of styrene-butadiene rubber.

6. The rubber lining according to one of the preceding claims, **characterized in that** undercut anchoring elements (48, 50, 52) are provided at the bottom side of the profiled body (41).

7. A grid floor element comprising a plurality of longitudinal and transverse beams (12, 14, 16; 18, 20, 22, 24) arranged in a plane, wherein a rubber lining (40) according to one of claims 1 to 6 is arranged on at least a part of the longitudinal and transverse beams (12, 14, 16; 18, 20, 22, 24).

## Revendications

1. Revêtement en caoutchouc pour un élément de sol de caillebotis comportant un corps profilé (41) allongé, pour l'essentiel en forme de dalle, revêtement dans la zone transversale centrale duquel sont prévues plusieurs ouvertures traversantes (44) s'étendant parallèlement les unes aux autres dans le sens longitudinal du corps profilé (41) dans un plan horizontal, **caractérisé en ce que** le corps profilé (41) présente une dureté de 60 à 80 Shore et **en ce que** les ouvertures traversantes (44) présentent une coupe transversale rectangulaire, la hauteur (h) des ouvertures traversantes (44) mesurant de 1 à 5 mm et la largeur (b) de 1 à 6 cm.

2. Revêtement en caoutchouc selon la revendication 1, **caractérisé en ce que** la hauteur (h) des ouvertures traversantes (44) mesure de 1 à 3 mm, de préférence 2 mm.

3. Revêtement en caoutchouc selon la revendication 1 ou 2, **caractérisé en ce que** la largeur (b) des ouvertures traversantes (44) mesure de 3 à 5 cm, de préférence 4 cm.

4. Revêtement en caoutchouc selon l'une des revendications précédentes, **caractérisé en ce que** le corps profilé (41) se compose de caoutchouc naturel.

5. Revêtement en caoutchouc selon l'une des revendications 1 à 3, **caractérisé en ce que** le corps profilé (41) se compose de caoutchouc styrène-butadiène.

6. Revêtement en caoutchouc selon l'une des revendications précédentes, **caractérisé en ce que** sur le dessous du corps profilé (41) sont prévus des éléments d'ancrage (48, 50, 52) contre-dépouillés.

7. Elément de sol de caillebotis comportant plusieurs barres longitudinales et transversales (12, 14, 16 ; 18, 20, 22, 24) disposées dans un plan, un revêtement en caoutchouc (40) selon l'une des revendications 1 à 6 étant disposé sur au moins une partie des barres longitudinales et transversales (12, 14, 16 ; 18, 20, 22, 24).
